# EUROPEAN PATENT SPECIFICATION

(11) **EP 0 307 112 B1**
(45) Date of publication and mention of the grant of the patent: **09.03.1994**
(21) Application number: 88307874.3
(22) Date of filing: 25.08.1988
(51) Int. Cl.: F16C 33/28, D04C 1/06

(54) **Braided bearing and method for making a braided bearing**
Geflochtenes Lager und Herstellungsverfahren für ein geflochtenes Lager
Palier tressé et méthode de fabrication d'un palier tressé

(30) Priority: 11.09.1987 US 95757
(43) Date of publication of application: 15.03.1989
(73) Proprietor: Kamatics Corporation, Bloomfield Connecticut 06002 (US)
(72) Inventor: Orkin, Stanley S., Vernon Connecticut 06066 (US); Carlson, Craid L., Granby Connecticut 06035 (US); Rowlands, David B., Simsbury Connecticut 06070 (US)
(74) Representative: Archer, Philip Bruce

(56) References cited:
- DE-A- 2 341 333
- FR-A- 1 167 769
- FR-A- 2 014 168
- US-A- 2 128 087
- US-A- 2 857 189
- US-A- 3 030 248
- US-A- 3 429 627
- US-A- 3 586 058
- US-A- 3 873 168
- US-A- 4 228 207
- US-A- 4 509 870

## Description

### TECHNICAL FIELD

The invention relates generally to bearings and deals more particularly with braided bearings having an integrally connected flange.

### BACKGROUND OF THE INVENTION

Bearings embodying the present invention may be used in aircraft, for example, to guide control shafts for jet engine vanes because such bearings are light-weight and may be self-lubricating. Such bearings also may be used in a marine environment, with hinges of doors of military landing crafts or ships, and latching mechanism for watertight doors because such bearings are resistant to salt water. In any application of a braided bearing embodying the present invention, the bearing may be exposed to rotational, oscillatory, or reciprocal stresses or a combination of such stresses transmitted by an associated shaft or other part.

An example of a flanged bearing is disclosed in U.S. Patent No. 3,030,248 to Runton, and takes the form of a washer punched or cut from a sheet of fabric. Another bearing of the same general type is disclosed in U.S. Patent No. 2,128,087 to Gatke, and takes the form of a cylindrical bushing made by rolling a sheet of fabric or coiling a strip of fabric into the shape of a cylinder. However, either mode of construction disclosed in '087 leaves an undesirable seam. Although it is possible to bond the cylindrical bushing of '087 to the washer of '248 by epoxy to make a flanged bushing, the epoxy bond is not strong or durable enough for some applications.

Another way to make a flanged bushing is to begin with an elongated cylindrical journal bushing of the type discussed in '087 and then make longitudinal cuts in an end portion of the cylinder to form strips which remain attached at one end to the remainder of the cylinder. Then these strips may be bent radially outward, and rigidified in the radial position with a thermosetting, thermoplastic or other type resin. However, this process takes several steps, and the bushing's flange strength is reduced by cuts in the fiber, resulting in discontinuous fibers connecting the flange to the cylindrical journal.

A flanged, cylindrical, fluid or electrical conduit comprising braided fibers and a hardened resin polyimide is disclosed in U.S. Patent 3,586,058 to Ahrens, as well as the method for making the conduit comprising braiding, immersion in resin, wrapping with tape, curing and postcuring. The Ahrens patent is not directed towards bearing technology and, therefore, provides no guidance as to the type of fiber, fiber configuration, resin selection or selection of any other parameters which would be useful in bearing design. A shaped, braided hollow body having a varying cross-section is described in U.S. Patent No. 4,228,207.

Other types of bearings used in aircraft and marine environments consist of powdered carbon which has been compressed into a hollow, cylindrical shape and encased in an outer metal jacket. The jacket may also include a collar or flange used to position the cylindrical body in a housing and absorb axial loads or thrusts. There are often hundreds of bushings in a jet engine, and these carbon type bushings have an appreciable size and weight in the aircraft in which they are used. Also, it is not uncommon for such a metal encased carbon bearing to come loose from its housing, in which case the bearing may be moved relative to the housing by frictional forces transmitted by an associated shaft, and wear the house because of the metal jacket.

There is disclosed in US-A-3 873 168 a composite article in the form of a bushing according to the preamble of claim 1 comprising a layer of woven glass sandwiched between a pair of layers of woven graphite. The layers are impregnated with resin at room temperature. The graphite fibres provide a low coefficient of friction as well as strength due to their preferred orientation substantially parallel to the bearing portion surface of the bushing.

Accordingly, it is an object of the present invention to provide fibrous bearings having an integral flange; and/or to provide a flanged bearing assembly including a fibrous bushing formed by continuous fibres having a cylindrical hollow body and an integrally connected flange; and/or to provide a flanged, braided bearing which is self-lubricating at high temperatures; and/or to provide a flanged, braided bearing having a plurality of strands which are aligned substantially parallel to a longitudinal axis of the bearing, and/or to provide bearings of the foregoing types which are lightweight and durable, and/or to provide a multilayered braided bearing having a flange formed by an outwardly displaced portion of the braid layers, or to provide improvements generally.

According to the present invention there is provided a bearing, as defined in claim 1 hereof and a method of making the bearing, as defined in claim 2 hereof.

The bushing for use as a bearing to guide an associated first part for movement and relative to a second part includes a hollow portion that has a longitudinal axis and that has inner and outer surfaces adapted to receive the first and second parts, respectively. A flanged portion which is integral and continuous with the hollow portion is formed to extend outwardly from a hollow outer surface. Both the hollow portion and the flanged portion are formed from a braid layer woven with a plurality of strands substantially parallel to the longitudinal axis. Also included is a means for rigidifying the woven braid.

The method for making a flanged bushing includes the steps of weaving a plurality of strands over a mandrel forming a continuously woven braid layer with a plurality of the strands substantially parallel to a woven braid longitudinal axis. The mandrel has a first portion which extends outward beyond a second portion. Also included is the step of applying a means for rigidifying the woven braid to form a bearing preform and configuring the bearing preform into a bearing.

A preferred method for making a flanged bearing includes the steps of weaving a plurality of strands to form continuous first and second woven braid layers that are concentric about a longitudinal axis. The braid layers are woven with a plurality of the strands substantially parallel to the woven braid longitudinal axis and such that the first and second woven braid layers are continuous at a peripheral edge thereof. Also included in the present method is the step of forming a flange at the braid layer peripheral edge with the flange extending outwardly from the woven braid layers, and the step of applying a means for rigidifying the woven braid to form a bearing preform. A further step is configuring the bearing preform into a bearing.

### BRIEF DESCRIPTION OF THE DRAWINGS

Fig. 1 is a perspective view of a flanged bushing type bearing embodying the present invention.

Fig. 2 is a sectional view of the flanged bushing of Fig. 1.

Fig. 3 is a sectional view of a bearing assembly embodying the invention, which assembly comprises the flanged bushing of Fig. 1 embedded in a housing and engaged by a shaft.

Fig. 4 is a perspective view of a mandrel used to form the bushing of Fig. 1.

Fig. 5 diagramatically show a braid progressively being woven onto the mandrel of Fig. 4.

Fig. 6 and 7 diagramatically show the braid of Fig. 5 woven completely onto the mandrel of Fig. 4 and clamped.

Fig. 8 is a simplified sectional view of a portion of an apparatus used in pressing bushings of the prior art.

Fig. 9. is a sectional illustration of a portion of an alternative embodiment of the bearing of Fig. 1.

### DETAILED DESCRIPTION OF THE PREFERRED EMBODIMENT

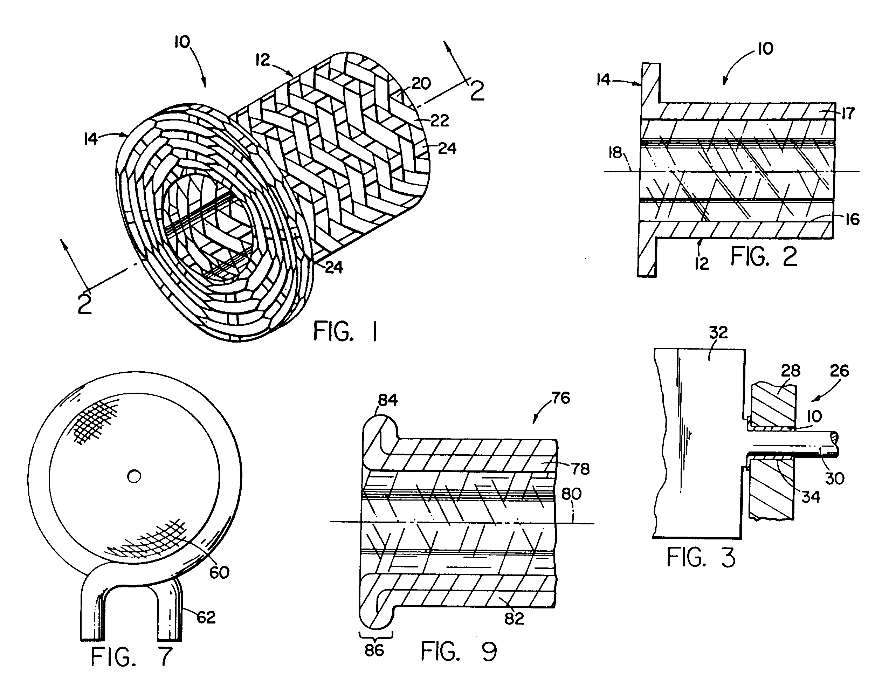

Figs. 1 and 2 show a plain, flanged bushing type bearing 10 embodying the present invention. The bushing 10 includes a hollow, cylindrical journal portion or sleeve 12 and an integral, radially extending, flange portion 14 at one end of the sleeve. The bushing 10 may be used to guide a shaft which is rotating, oscillating, reciprocating or otherwise moving within the bushing 10 in contact with an inner surface 16.

As detailed hereinafter, the bushing comprises a plurality of strands woven together into a braid forming a braid layer 17 with strands woven either at an angle or parallel to a longitudinal bearing axis 18. Each strand comprises a plurality of individual fibers or filaments. In the Fig. 1 embodiment, strands 20 and 22 are disposed at an angle with respect to axis 18, while strand 24 remains substantially parallel thereto. As detailed hereinafter, a bearing provided according to the present invention is characterized by strands which maintain their relative orientation, even when finally configured as a flanged portion. Therefore, in Fig. 1, strand 24 continues through the flanged portion 14 with substantially the same relationship to strand 20 and 22 as it had in the cylindrical journal portion. In the embodiment described with respect of Figure 1, the flange portion extends outwardly from the axis 18 by approximated 90° so that strand 24 extends radially from the axis. For purposes for illustration, the number of externally visible axial strands has been exaggerated.

There are many possible materials from which to make the braid and many possible resins; the choice thereof depends, at least in part, on the conditions in which the bearing will be utilized. For example, if the bushing 10 will be used at temperatures in the range of 204 to 385°C (400 to 725°F), graphite strands may be used and the resin may comprise a polyimide substance. Such a combination of strands and resin is strong, durable and self-lubricating under high temperature conditions, as are typical within an operating jet engine.

However, if the bushing 10 will be used in a marine environment, a strand may comprise fiberglass, polyester, teflon or Kevlar, a product of E. I. duPont Company. For other operating environments, the strands may comprise nylon, cotton, ceramic, metallic braid, flax or other material, and the resin may be made of polyester, epoxy, or other thermosetting or thermoplastic material. For certain applications the strands may be selected from known materials already impregnated with resin (prepreg). Those skilled in the art will note that the number of fibers comprising an individual strand is selected based on the application of the bearing.

For a high temperature application, a flanged bushing 10 may be used in conjunction with a shaft made of a variety of materials also durable at high temperatures, such as Inconel, a metal commonly used in the aircraft industry, or titanium coated with nickel by the electroless process. The titanium is ordinarily coated with nickel, at least for parts which are commonly subject to friction, such as a shaft, because titanium alone wears when exposed to such forces. A flanged bearing provided according to the present invention is suitable for aircraft applications because it is lightweight, strong, and thin-walled and is compatible with other composite elements.

Fig. 3 shows a bearing assembly generally designated 26 comprising the bushing 10 situated in a housing 28 and in receipt of a shaft 30, the shaft being connected to a jet engine vane 32. The flange provides a bearing surface for a related abutting part, such as the vane 32. The bushing 10 may be received by or attached to the housing in a variety of ways. For example, in the illustrated embodiment, the vane bears on an outer surface of the flange 14 so the bushing may be loosely fit in a bore 34 in the housing. However, if desired, the bushing 10 may be further secured to the housing by an appropriate adhesive applied between the flange and the housing. Instead of or in addition to the adhesive, the bushing 10 may be pressed into the housing and secured by means of an interference fit. Alternatively, it is possible to key the bushing into the housing.

Shafts in general, exert axial forces or thrust on a bushing even if it is intended that the shaft only rotate, oscillate or otherwise circularly move within the bushing. Therefore, it is possible for the bushing 10, as well as many other types of bushings, to come loose within their respective housings even if the bushing was originally pressed into the bore, secured by adhesive, or by the weight of another object bearing on the flange 14, and rotate or oscillate within the housing due to frictional forces exerted by a rotating or oscillating shaft. Also, if the longitudinal position of the flange 14 is not fixed by such an object, it is possible for the bushing 10 to come loose and reciprocate within the housing. Fortunately, under such conditions where the bushing 10 is moved in any manner within the housing, the bushing 10 may cause less wear on the housing than would a bushing having a metal jacket, especially if the strand and resin material of the bushing 10 are self-lubricating.

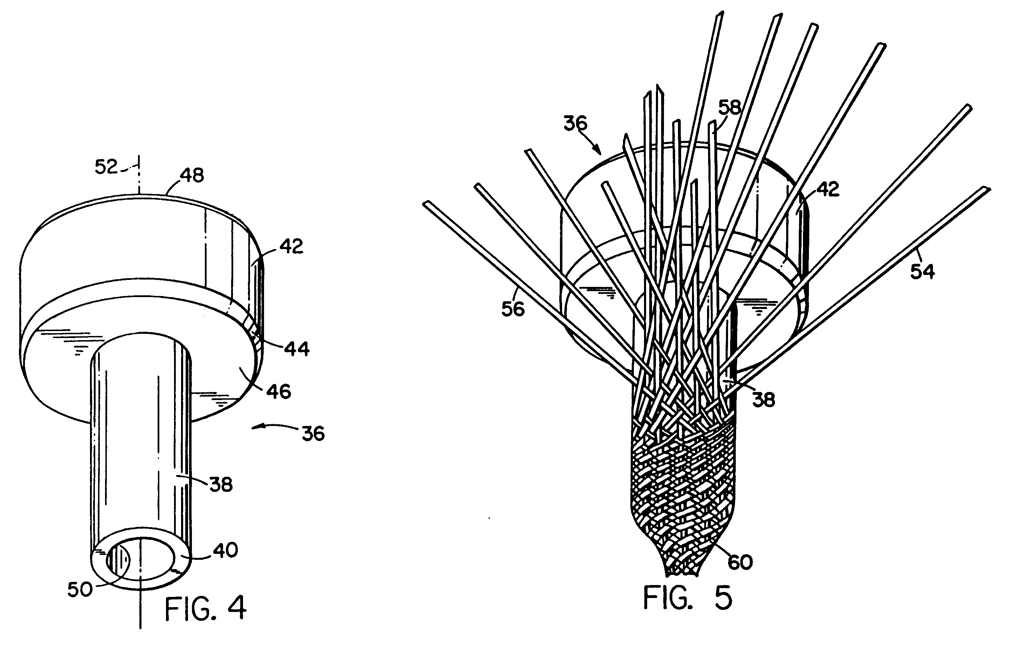

Referring now to Fig. 4, there is illustrated in section a braiding mandrel 36, which includes a cylindrical shank portion 38 having bottom end surface 40 and a cylindrical shoulder portion 42 attached at the end of the shank portion opposite the end surface 40, the shoulder 42 being broader than the shank and having a bevel 44. The shoulder includes a flat end surface 46 extending radially outward from the shank, and another end surface 48 which other end surface may be involved in the braiding process. The mandrel serves as an armature upon which to weave the individual strands or bundles and includes an aperture 50 for receiving a rod (not shown) which rod is used to move the mandrel during the braiding process, the mandrel being removed in a subsequent fabrication step by means of a mold release agent, such as silicon applied to the surface of the mandrel.

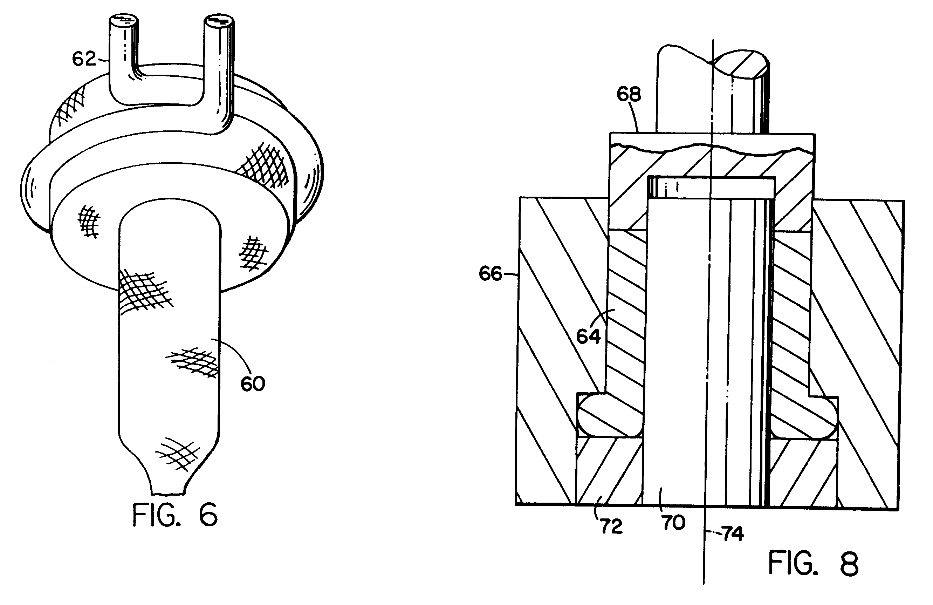

A bushing provided according to the present invention comprises a plurality of strands woven both at an angle to a longitudinal axis 52 of the mandrel and strands parallel to that axis. As woven, the individual strands maintain their geometric relationships as the woven braids encompass the shank 38 and shoulder 42 of the mandrel illustrated in Fig. 6. Longitudinal or axial strands provide additional strength to the bushing along the longitudinal axis and substantially increase the strength of the bushing at the junction of the flange and sleeve. Therefore, the strength of the bushing flange is considerably increased over known braided bearings.

Fig. 5 diagramatically shows strands progressively being woven onto the mandrel 36, and based on the orientation of the mandrel, each braid is woven upwardly. Any one of the various well known braiding or weaving techniques can be utilized to weave the braids of the present invention. For example, spools of fibre are arranged on at least one ring around a mandrel and strands leads of the fibers, such as the crossing strands 54, 56 and axial strand 58, are woven to form a braid layer 60.

The bottom end 40 of the shank of the mandrel is inserted into the braid layer, and the weaving may be continued longitudinally to cover the shank as shown in Fig. 6, continued radially outward to cover the end surface 46 of the shoulder and continued longitudinal upward to ultimately cover at least a portion of the cylindrical surface of the shoulder 42 with a layer of woven braid. In a preferred embodiment it is not necessary to completely cover the cylindrical surface of the shoulder 42 or to cover the other end surface 48 with woven braid because the flange 14 is ultimately produced from only a portion thereof. As shown in Figs. 6 and 7, the woven braid layer 60 is clamped by a ring 62 onto the shoulder.

If the illustrated braiding process is continued longitudinally to completely cover the cylindrical surface of the shoulder and then continued radially inward to cover at least a portion of the end surface as shown in Fig. 7, the woven braid covering the shank and the end surface may effectively retain their shape until the clamping ring is applied. Furthermore, with the complete covering of braid on the cylindrical surface and a covering on much of the end surface, the braid may be cut above the end surface, and a resin applied to the braid and cured with or without utilizing the clamping ring. Those skilled in the art will note that the woven braid may be folded back upon itself in a conventional manner and continued forming an additional layer of braid.

After the weaving process has bee completed the woven braid must be resin impreganted. For the illustrated embodiment, the woven braid layer is clamped, cut above the shoulder, and impregnated with resin. If a polyimide resin has been used, the resin impregnated braid and mandrel are subjected to a "B-stage" process to produced a preform whereby the resin impregated braid is force dried for fifteen minutes each at 93°, 121° and 135°C (200°, 250°, and 275°F). The resin is cured by heating the resin impregnated braid above 204°C (400°F) at 13.79 x 10⁶Nm⁻² (2,000 psi) of pressure in a press to debulk the preform and cause the resin impregnated braid to rigidify. The preform is cut near the peripheries of the end surfaces of the mandrel and the ring and the excess braid removed. Subsequently, the rigidified braid preform is post cured for approximately three hours. The rigidified braid is machined at the peripheries of the end surfaces to form the bottom of the sleeve 12 and the outer periphery of the flange 14, respectively.

Another process which may be followed to form a flanged, hollow body is disclosed in US-A-3 586 058 to Ahrens, which issued on 22 June 1971, is assigned to McDonnel Douglas, and is hereby incorporated by reference as part of the present disclosure. There, a flanged conduit is formed by first weaving a braid over a mandrel having a cylindrical shank and detachable, conically-shaped head. Then, this head is replaced with a flat head which abuts and flattens the portion of the braid which was previously formed over the conical head, and a resin is applied to the braid to stiffen it.

If the process described hereinabove is utilized to form a bushing, the dimensions of the cylindrical portion 12 and the flange 14 may be controlled by providing a braiding mandrel with corresponding shank and shoulder dimensions, and because the cylindrical body 12 of the bushing 10 comprises a braid, the cylindrical body 12 may have virtually unlimited length possible. Moreover, with a bearing provided according to the present invention the bearing journal to flange dimensional aspect ratios are greatly increased due to the strengthened journal to flange interface.

In contrast, Fig. 8 illustrates, in section, a bushing preform 64 which is pressed in an apparatus 66 having a ram portion 68, a center pin 70 and a central plug portion 72. To form the flange the ram exerts pressure along a longitudinal axis 74 of the preform displacing a portion of the preform radially outward. However, by simply displacing one end of the hollow preform portion, there will be no strands which maintain relative alignment at the interface between the flange and hollow portions. This is true even if the braid layer is woven with a plurality of axial strands. During the process of displacing the single braid layer, the alignment of all strands, including any axial strands is disturbed, crossing one another and otherwise becoming random in orientation.

Fig. 9 is a sectional illustration of an alternative embodiment 76 of the bushing of Figure 1. Without the use of a mandrel, the weaving method and apparatus used in the formation of the bushing 10 of Figure 1 will weave a substantially cylindrical braided layer generally indicated at 78. After the first layer of the braid has been woven a selected length about an axis 80, an outermost portion of the first braid layer is folded back over on itself, such that a second braid layer 82 is formed exterior to the first. This second braided layer is continuous and integral with the first and is joined therewith about a peripheral edge 84.

When the second back braid layer has a sufficient length, the weaving process is halted and a flange 86 is formed by folding or otherwise outwardly displacing a portion of the braided layers including peripheral edge 84. The size of the flange is dependent on the amount of braided layer displacement and can be adjusted according to the bushing application. As in the bushing 10 of Figure 1, the woven braided layers with a flange forms a preform and can be processed with a rigidifying means such as a resin or other rigidifying means in a manner similar to that of bushing 10 of Figure 1.

Unlike a single braid layer, a multiple braid layer which is continuous at a peripheral edge maintains the relative orientation of the strands during the flange formation process. The outer braid layer formed by back braiding not only provides additional strength but prevents distortion of the strands and loss of relative orientation during the flange formation process. For more strength, the braided layer is woven with plurality of strands substantially parallel to the longitudinal axis of the bushing in the manner described hereinabove. In the bushing of Fig. 9, axial strands transverse the length of the braid layer 78, extend radially outward from and back toward axis 80 in the flange 86, and longitudinally traverse along braid layer 82.

## Claims

1. A bearing (10) for use in guiding an associated first part (29) for movement relative to a second part (26) of the type comprising a hollow cylindrical portion (12) symmetrically arranged about a bearing longitudinal axis (18) and having a constant diameter defining an unvarying cross-sectional shape; said hollow cylindrical portion (12) along its length having an inner surface adapted to receive one of said first and second parts and having an outer surface adapted to cooperate with the other of said first and second parts; an annular flange portion (14) integrally connected with said cylindrical hollow portion (12) and extending radially outwardly from said hollow portion outer surface substantially perpendicularly thereto; said cylindrical hollow portion and said flange portion being formed from a woven braid layer (17), said bearing being characterized by:
said braid layer having a plurality of axial strands (24) integrally formed therewith and spaced apart from one another about said cylindrical hollow portion and extending substantially parallel relative to said longitudinal axis (18); portions of said plurality of axial strands being directed perpendicularly outwardly from said cylindrical hollow portion outer surface and into said flange portion such that each of said axial strands in said flange portion are radially outwardly directed from said cylindrical hollow portion;
said braid layer further including a plurality of cross strands (54) interwoven between said plurality of axial strands; and resin means impregnated in the woven braid layer for rigidly maintaining the unvarying configuration of said cylindrical hollow portion and the perpendicular orientation of said flange portion relative thereto.

2. A method of making a bearing (10) having a hollow portion (12) and a connected flange portion (14) for guiding an associated first part (29) for movement relative to a second part (26), said method comprising the steps of providing a mandrel (36) having a longitudinal axis (52) and having a cylindrical shank portion (38) having a free end (40) and an opposite end connected with a cylindrical shoulder portion; said method comprising arranging said cylindrical shank portion and said cylindrical shoulder portion concentrically about said mandrel longitudinal axis (52) and providing said cylindrical shoulder portion with a diameter broader than that of said shank portion such that said shoulder portion and said shank portion are interconnected with one another by a flat end surface extending radially outwardly and perpendicularly from said cylindrical shank portion, said method further comprising
weaving a plurality of strands (24) over said mandrel (36) to form a mandrel-bearing preform (68) by providing a plurality of axial strands and orienting each of said axial strands substantially parallel to said mandrel longitudinal axis (52) along the outer surface of said cylindrical shank portion; orienting portions of each of said axial strands along said flat end surface (46) radially outwardly relative to said mandrel longitudinal axis; providing a plurality of cross strands (54) and weaving said cross-strands with said axial strands to form a continuous woven braid layer overlaying said cylindrical shank portion to form the portion of said bearing corresponding to said hollow portion; continuing weaving said cross-strands with said axial strands over said mandrel to thereby overlay said flat end surface (46) with said woven braid layer to form the portion of said bearing corresponding to its flanged portion; clamping said woven braid layer on said mandrel to maintain said axial strands in said orientations along said cylindrical shank portion and said flat end surface taken relative to said mandrel longitudinal axis; impregnating said woven braid layer with a resin means to form a mandrel-bearing preform assembly; and
curing said rigidifying means while applying pressure to said woven braid layer to compress said mandrel-bearing preform assembly and cure it in such a manner so that said axial strands maintain their orientations relative to said mandrel longitudinal axis along the length of said cylindrical shank portion and along said flat end surface extending between said cylindrical shank portion and said cylindrical shoulder portion to provide increased strength in the area of said bearing where the flange portion connects with said hollow portion.

3. A method according to claim 2 characterized by said step of applying pressure to said woven braid includes a debulking step of pressing said mandrel-bearing preform assembly.

4. A method according to claim 3 characterized by the step of removing the mandrel from the debulked preform and trimming the debulked preform into a bearing.

5. A method according to claim 2 characterized by said step of forming said mandrel bearing preformed assembly by weaving a plurality of strands over said mandrel further includes the steps of weaving a second braid layer (82) over said woven braid layer (78) in contact with said mandrel (36).

6. A method according to claim 2 characterized by said step of impregnating said woven braid layer with a resin means includes the steps of;
impregnating the preform with resin; and heating said impregnated preform to a selected temperature while applying said pressure for a selected period of time.

7. A flanged bearing made according to the method of claim 2.

## Patentansprüche

1. Ein Lager (10) zur Verwendung bei der beweglichen Führung eines zugeordneten ersten Teils (29) relativ zu einem zweiten Teil (26), umfassend einen hohlzylindrischen Bereich (12), der symmetrisch um eine Längsachse (18) des Lagers angeordnet ist und einen konstanten Durchmesser hat, der eine sich nicht ändernde Querschnittsform definiert, wobei der hohlzylindrische Bereich (12) entlang seiner Länge eine für die Aufnahme entweder des ersten oder des zweiten Teils ausgebildete Innenfläche und eine für das Zusammenwirken mit dem jeweils anderen Teil ausgebildete Außenfläche hat; einen zylindrischen Flanschbereich (14), der einstückig mit dem hohlzylindrischen Bereich (12) verbunden ist und sich von der im wesentlichen senkrecht dazu verlaufenden Außenfläche des Hohlbereichs radial nach außen erstreckt, wobei der hohlzylindrische Bereich und der Flanschbereich aus einer Flechtschicht (17) gebildet sind, **dadurch gekennzeichnet**, daß die Flechtschicht eine Vielzahl von damit einstückig gebildeten axialen Litzen (24) hat, die um den hohlzylindrischen Bereich herum voneinander beabstandet sind und sich in bezug auf die Längsachse (18) im wesentlichen parallel erstrecken; daß Bereiche dieser Vielzahl von axialen Litzen von der Außenfläche des hohlzylindrischen Bereichs senkrecht nach außen und in den Flanschbereich hinein gerichtet sind, so daß jede dieser axialen Litzen in dem Flanschbereich von dem hohlzylindrischen Bereich aus radial nach außen gerichtet ist; daß die Flechtschicht ferner eine Vielzahl von Querlitzen (54) hat, die mit der Vielzahl von axialen Litzen verflochten sind; und daß die Flechtschicht mit einem Harzmittel imprägniert ist, um die sich nicht verändernde Konfiguration des hohlzylindrischen Bereichs und die dazu senkrechte Ausrichtung des Flanschbereichs fest beizubehalten.

2. Verfahren zur Herstellung eines Lagers (10) mit einem Hohlbereich (12) und einem daran anschließenden Flanschbereich (14) zum beweglichen Führen eines zugeordneten ersten Teils (29) relativ zu einem zweiten Teil (26)**, gekennzeichnet durch** folgende Verfahrensschritte:
Bereitstellung eines Dorns (36), der eine Längsachse (52) und einen zylindrischen Schaftbereich (38) hat, der ein freies Ende (40) und ein mit einem Schulterbereich verbundenes gegenüberliegendes Ende hat;
Anordnen des zylindrischen Schaftbereichs und des zylindrischen Schulterbereichs konzentrisch um die Längsachse (52) des Dorns und Ausbildung des zylindrischen Schulterbereichs mit einem Durchmesser, der breiter ist als jener des Schaftbereichs, so daß der Schulterbereich und der Schaftbereich durch eine sich von dem zylindrischen Schaftbereich aus radial nach außen und senkrecht erstreckende flache Endfläche miteinander verbunden sind;
Flechten einer Vielzahl von Litzen (24) über den Dorn (36) zur Bildung eines von dem Dorn getragenen Vorformlings (68), indem eine Vielzahl von axialen Litzen vorgesehen und deren jede entlang der Außenfläche des zylindrischen Schaftbereichs im wesentlichen parallel zur Längsachse (52) des Dorns orientiert wird;
Orientieren von Abschnitten einer jeder der axialen Litzen entlang der flachen Endfläche (46) relativ zu der Längsachse des Dorns radial nach außen:
Bereitstellen einer Vielzahl von Querlitzen (54) und Verflechten dieser Querlitzen mit den axialen Litzen zur Bildung einer kontinuierlichen Flechtschicht, die zur Bildung des dem Hohlbereich entsprechenden Bereichs des Lagers den zylindrischen Schaftbereich überzieht;
Fortsetzen des Verflechtens der Querlitzen mit den axialen Litzen über den Dorn, um dadurch die flache Endfläche (46) mit der gewebten Flechtschicht zur Bildung des Bereichs des Lagers zu überziehen, der seinem geflanschten Bereich entspricht;
Festklemmen der gewebten Flechtschicht an dem Dorn, um die axialen Litzen in der relativ zur Längsachse des Dorns vorgenommenen Orientierung entlang des zylindrischen Schaftbereichs und der flachen Endfläche zu halten;
Imprägnieren der gewebten Flechtschicht mit einem Harzmittel zur Bildung eines von dem Dorn getragenen Vorformlings und
Aushärten des Versteifungsmittels während der Aufbringung von Druck auf die gewebte Flechtschicht, um den von dem Dorn getragenen Vorformling zu komprimieren und so auszuhärten, daß die axialen Litzen ihre Orientierung relativ zur Längsachse des Dorns entlang der Länge des zylindrischen Schaftbereichs und entlang der sich zwischen dem zylindrischen Schaftbereich und dem zylindrischen Schulterbereich erstreckenden flachen Endfläche beibehalten, um für eine größere Festigkeit in dem Bereich des Lagers zu sorgen, in welchem der Flanschbereich an den Hohlbereich anschließt.

3. Verfahren nach Anspruch 2, **dadurch gekennzeichnet**, daß der Schritt des Aufbringens von Druck auf das Geflecht einen Schrumpfvorgang enthält, in dem der von dem Dorn getragene Vorformling mit Druck beaufschlagt wird.

4. Verfahren nach Anspruch 3, **gekennzeichnet durch** den Schritt des Entfernens des Dorns aus dem geschrumpften Vorformling und Trimmen des geschrumpften Vorformlings zu einem Lager.

5. Verfahren nach Anspruch 2, **dadurch gekennzeichnet**, daß der Schritt zur Herstellung des von dem Dorn getragenen Vorformlings durch Flechten einer Vielzahl von Litzen über den Dorn ferner den Schritt enthält, bei dem eine zweite Flechtschicht (82) über die an dem Dorn (36) anliegende Flechtschicht (78) geflochten wird.

6. Verfahren nach Anspruch 2, **dadurch gekennzeichnet**, daß der Schritt zum Imprägnieren der gewebten Flechtschicht mit einem Harzmittel den Schritt des Imprägnierens des Vorformlings mit Harz und den Schritt des Erwärmens des imprägnierten Vorformlings auf eine gewählte Temperatur unter Anwendung von Druck über eine gewählte Zeitdauer enthält.

7. Geflanschtes Lager, das entsprechend dem Verfahren gemäß Anspruch 2 hergestellt ist.

## Revendications

1. Palier (10) destiné à être utilisé pour le guidage d'une première partie associée (29) afin qu'elle se déplace par rapport à une seconde partie (26), du type qui comprend une partie cylindrique creuse (12) disposée symétriquement autour d'un axe longitudinal (18) du palier et ayant un diamètre constant délimitant une configuration de section invariable, la partie cylindrique creuse (12) ayant sur sa longueur une surface interne destinée à loger l'une desdites première et seconde parties et ayant une surface externe destinée à coopérer avec l'autre desdites première et seconde parties, une partie de bride annulaire (14) raccordée à la partie cylindrique creuse (12) dont elle est solidaire et dépassant radialement à l'extérieur de ladite surface externe de la partie creuse en direction sensiblement perpendiculaire à celle-ci, la partie cylindrique creuse et la partie de bride étant formées d'une couche tressée tissée (17), le palier étant caractérisé en ce que
ladite couche tressée a plusieurs torons axiaux (24) qui sont formés afin qu'ils en soient solidaires et qui sont espacés les uns des autres autour de la partie cylindrique creuse et sont disposés en direction sensiblement parallèle à l'axe longitudinal (18), des parties des torons axiaux étant dirigées perpendiculairement vers l'extérieur de la surface externe de la partie cylindrique creuse et dans ladite partie de bride de manière que chacun des torons axiaux de la partie de bride soit dirigé radialement à l'extérieur de la partie cylindrique creuse, la couche tressée comprenant en outre plusieurs torons transversaux (54) tissés entre les torons axiaux, et un dispositif à résine imprégnés dans la couche de tresse tissée et destiné à maintenir rigidement la configuration invariable de la partie cylindrique creuse et l'orientation perpendiculaire de la partie de bride l'une par rapport à l'autre.

2. Procédé de fabrication d'un palier (10) ayant une partie creuse (12) et une partie (14) de bride qui lui est raccordée afin qu'une première partie associée (29) soit guidée et puisse se déplacer par rapport à une seconde partie (26), ledit procédé comprenant les étapes suivantes :
la disposition d'un mandrin (36) ayant un axe longitudinal (52) et ayant une partie cylindrique de tige (38) qui a une extrémité libre (40) et une extrémité opposée raccordée à une partie cylindrique d'épaulement, le procédé comprenant la disposition de la partie cylindrique de tige et de la partie cylindrique d'épaulement concentriquement autour de l'axe longitudinal du mandrin (52) et la disposition de ladit partie cylindrique du mandrin avec un diamètre supérieur à celui de la partie de tige afin que la partie d'épaulement et la partie de tige soient raccordées l'une à l'autre par une surface plate d'extrémité disposée radialement vers l'extérieur et perpendiculairement à la partie cylindrique de tige, le procédé comprenant en outre :
le tissage de plusieurs torons (24) sur le mandrin (36) pour la formation d'une préforme (68) de palier sur le mandrin, par disposition de plusieurs torons axiaux et orientation de chacun des torons axiaux en direction sensiblement parallèle à l'axe longitudinal (52) du mandrin à la surface externe de la partie cylindrique de tige, l'orientation de parties de chacun des torons axiaux le long de la surface plate d'extrémité (46) en direction radiale vers l'extérieur par rapport à l'axe longitudinal du mandrin, la disposition de plusieurs torons transversaux (54) et le tissage des torons transversaux avec les torons axiaux pour la formation d'une couche continue de tresse tissée recouvrant la partie cylindrique de tige pour la formation de la partie de palier correspondant à la partie creuse, la poursuite du tissage des torons transversaux avec les torons axiaux sur le mandrin afin que la surface plate d'extrémité (46) soit recouverte de la couche de tresse tissée pour la formation de la partie de palier correspondant à sa partie de bride, le serrage de la couche de tresse tissée sur le mandrin afin que les torons axiaux soient maintenus avec lesdites orientations le long de la partie cylindrique de tige et la surface plate d'extrémité par rapport à l'axe longitudinal du mandrin, l'imprégnation de la couche de tresse tissée d'un dispositif à résine pour la formation d'un ensemble à ébauche de palier sur un mandrin, et
le durcissement du dispositif de rigidification avec application d'une pression à la couche de tresse tissée de manière que l'ensemble à préforme de palier sur le mandrin soit comprimé et durcisse d'une manière telle que les torons axiaux gardent leur orientation par rapport à l'axe longitudinal du mandrin sur la longueur de la partie cylindrique de tige et le long de la surface plate d'extrémité disposée entre la partie cylindrique de tige et la partie cylindrique d'épaulement, afin que la résistance mécanique soit accrue dans la région du palier dans laquelle la partie de bride se raccorde à la partie creuse.

3. Procédé selon la revendication 2, caractérisé en ce que l'étape d'application d'une pression à la tresse tissée comprend une étape de compactage avec pressage de l'ensemble à préforme de palier sur le mandrin.

4. Procédé selon la revendication 3, caractérisé par l'étape d'enlèvement du mandrin de la préforme compactée et de finition de la préforme compactée sous forme d'un palier.

5. Procédé selon la revendication 2, caractérisé en ce que l'étape de formation de l'ensemble à préforme de palier sur le mandrin par tissage de plusieurs torons sur le mandrin comporte en outre des étapes de tissage d'une seconde couche de tresse (82) sur la couche (78) de tresse tissée au contact du mandrin (36).

6. Procédé selon la revendication 2, caractérisé en ce que l'étape d'imprégnation de la couche de tresse tissée par un dispositif à résine comprend les étapes suivantes :
l'imprégnation de la préforme par une résine, et
le chauffage de la préforme imprégnée à une température sélectionnée avec application de la pression pendant une période sélectionnée.

7. Palier à bride fabriqué selon le procédé de la revendication 2.
